(19) **Europäisches Patentamt**
European Patent Office
Office européen des brevets

(11) **EP 2 022 592 B1**

(12) **EUROPÄISCHE PATENTSCHRIFT**

(45) Veröffentlichungstag und Bekanntmachung des Hinweises auf die Patenterteilung:
**15.01.2014  Patentblatt 2014/03**

(51) Int Cl.:
***B23K 9/095*** *(2006.01)*          ***B23K 9/32*** *(2006.01)*

(21) Anmeldenummer: 08103967.9

(22) Anmeldetag: **15.05.2008**

(54) **Verfahren, Vorrichtung und System zur Ermittlung einer Schweissgeschwindigkeit bei einem manuell ausgeführten Lichtbogenschweissvorgang**

Method, device and system for determining welding speed for a manual arc welding process

Procédé, dispositif et système de détermination d'une vitesse de soudage lors d'un processus de soudage à l'arc exécuté manuellement

(84) Benannte Vertragsstaaten:
**DE FR GB IT**

(30) Priorität: **01.08.2007  DE 102007036505**

(43) Veröffentlichungstag der Anmeldung:
**11.02.2009  Patentblatt 2009/07**

(73) Patentinhaber: **EWM AG**
**56271 Mündersbach (DE)**

(72) Erfinder: **Szczesny, Michael**
**56235 Ransbach-Baumbach (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
**WO-A2-2005/110658    US-A- 4 399 346**
**US-A- 5 464 957**

**Beschreibung**

Die vorliegende Erfindung betrifft ein Verfahren, eine Vorrichtung und ein System zur Ermittlung einer Schweißgeschwindigkeit bei einem manuell ausgeführten Lichtbogenschweißvorgang.

STAND DER TECHNIK

Die Nahtausbildung beim Lichtbogenschweißen wird in erster Linie vom Schweißstrom $I_s$, der Schweißspannung $U_s$ und der Schweißgeschwindigkeit $v_s$ beeinflusst. Aus diesen für eine optimale Nahtausbildung wesentlichen Schweißparametern kann eine Streckenenergie E abgeleitet werden, welche wie folgt berechnet werden kann:

$$E = \frac{U_s \cdot I_s}{v_s}$$

Eine konstante Streckenenergie bildet die Voraussetzung für Qualität und Wirtschaftlichkeit beim Schweißen.

Aber gerade beim nicht automatisierten Schweißvorgang gestaltet sich die Abstimmung der einzelnen Parameter als besonders schwierig, da die Schweißgeschwindigkeit $V_s$, insbesondere wenn die Fügekonturen nicht linear verlaufen, während des gesamten Schweißprozesses stark schwanken kann. Um diese Schwankungen zu kompensieren, ist eine ständige Ermittlung der Schweißgeschwindigkeit $v_s$ notwendig, welche im Vergleich zum automatisierten Schweißvorgang nicht als Ist-Wert, beispielsweise über eine Robotersteuerung, abgerufen werden kann.

Beispielsweise ist aus der DD 142677 A1 bekannt, dass die Schweißgeschwindigkeit $v_s$ durch die Erfassung der Relativbewegung des Werkstücks gegenüber dem Schweißbrenner ermittelt werden kann. Dieses Messverfahren ist bei einem rein manuellen Schweißverfahren allerdings nicht anwendbar.

Ein Verfahren zum Ermitteln der Schweißgeschwindigkeit $v_s$, welches auch beim manuellen Schweißverfahren Anwendung findet, ist aus dem europäischen Patent EP 1077784 B1 bekannt. Hierbei kann auf die Schweißgeschwindigkeit $v_s$ mittels einer Widerstandsbrücke, gebildet durch drei Messpunkte und einer Steuervorrichtung in Form eines Spannungsteilers, aufgrund der Veränderung der einzelnen Spannungen rückgeschlossen werden. Diese Lösung zeigt allerdings den Nachteil, dass einerseits ein relativ großer Aufwand bei der Vorbereitung durch das Anbringen der Messkontakte nötig ist und sich andererseits aufgrund der auftretenden Temperaturschwankungen während des Schweißprozesses eine hohe Messungenauigkeit ergibt.

Die Druckschrift US 4,399,346 A offenbart ein System zur Überwachung der Qualität einer Schweißnaht, und insbesondere ein System zur Überwachung der Geschwindigkeit, mit der das Schweißgerät die Schweißnaht erzeugt. Hierzu umfasst das System ein Sensorsystem mit zwei gleichen Kanälen zur Ermittlung der Temperatur an zwei Punkten der Schweißnaht, welche in einem Abstand voneinander angeordnet sind. Jeder Kanal weist hierzu eine optische Glasfaser und eine Linsenanordnung auf, wobei die erfassten Lichtsignale in elektrische Signale umgewandelt werden, und das Differenzsignal dieser elektrischen Signale proportional zur Geschwindigkeit der durchgeführten Schweißnaht ist. Die Glasfasern können am Elekrodenhalter befestigt sein.

Die US 5,464,957 A offenbart ein Verfahren und eine Vorrichtung zur schrittweisen Temposteuerung eines manuellen Schweißvorgangs entlang einer Schweißlinie, wobei Töne oder Lichtblitze in einer Taktfrequenz erzeugt werden. Die Töne oder Lichtblitze können durch den Schweißer mit entlang der Schweißlinie angebrachten Markierungen korreliert werden. Bei jedem Ton oder Lichtblitz sollte der Schweißer die nächste Markierung erreicht haben. Es können optische Glasfasern, welche entlang der gewünschten Schweißlinie angeordnet sind, verwendet werden, wobei in einem Ausführungsbeispiel die Glasfasern zur Aufnahme von Licht, welches durch den Schweißvorgang erzeugt ist, eingesetzt werden. Aufgrund des von den äquidistant angeordneten Glasfasern aufgenommenen Lichts kann die Geschwindigkeit des Schweißvorgangs ermittelt werden und mit einer vorgegeben Geschwindigkeit verglichen werden. Ein einfaches audiovisuelles System kann im Schweißhelm angeordnet werden, um dem Schweißer anzuzeigen, ob die richtige Geschwindigkeit beibehalten wird oder ob die Geschwindigkeit erhöht oder reduziert werden muss.

BESCHREIBUNG DER ERFINDUNG

Der Erfindung liegt davon ausgehend die Aufgabe zugrunde, ein Verfahren, eine Vorrichtung und ein System für eine   verbesserte Ermittlung einer Schweißgeschwindigkeit bei einem manuell durchgeführten Lichtbogenschweißvorgang zu schaffen.

Diese Aufgabe wird gelöst durch ein Verfahren zur Ermittlung einer Schweißgeschwindigkeit bei einem Lichtbogenschweißvorgang nach Anspruch 1.

Diese Aufgabe wird ferner gelöst durch eine Vorrichtung zur Ermittlung einer Schweißgeschwindigkeit bei einem Lichtbogenschweißvorgang nach Anspruch 15.

Diese Aufgabe wird ferner gelöst durch ein System zum Lichtbogenschweißen, umfassend die zuvor genannte Vorrichtung und eine eine Schweißenergiequelle umfassende Lichtbogenschweißvorrichtung.

Der Begriff Lichtbogenschweißvorgang kann auch einen Lichtbogenlötvorgang umfassen.

Auf   Basis   des   detektierten Lichtbogenschweißvorgangs   wird   die   momentane

Schweißgeschwindigkeit $v_s$ des Lichtbogenschweißvorgangs ermittelt.

Die Detektionseinrichtung kann z.B. eine optische Detektionseinrichtung, wie z.B. eine Kamera, darstellen, so dass aus der detektieren optischen Information über den Lichtbogenschweißvorgang die Schweißgeschwindigkeit $v_s$ ermittelt werden kann. Hierzu können Mittel zur Ermittlung der Schweißgeschwindigkeit $v_s$ vorgesehen sein, welche z.B. eine Elektronik oder einen Prozessor oder eine sonstige Recheneinheit zur Auswertung der Bildinformation und zur Berechnung der Schweißgeschwindigkeit $v_s$ darstellen können.

Die bewegliche Schutzvorrichtung stellt eine Schutzvorrichtung dar, die von einer schweißenden Person zum Schutz getragen werden kann.

Beispielsweise kann die bewegliche Schutzvorrichtung ein Schutzhelm sein, welcher von einer schweißenden Person aufgesetzt wird, oder die bewegliche Schutzvorrichtung kann ein Schutzvisier sein, welches von einer schweißenden Person bei einem Schweißvorgang vor das Gesicht gehalten wird.

Durch die Anbringung der Detektionseinrichtung an der beweglichen Schutzvorrichtung kann somit gewährleistet werden, dass die Detektionseinrichtung bei einem Lichtbogenschweißvorgang durch die Verwendung der beweglichen Schutzvorrichtung automatisch auf den Lichtbogenschweißvorgang ausgerichtet wird und somit eine gute Detektion des Lichtbogenschweißvorgangs erfolgt.

Somit kann auch bei einem manuell durchgeführten Schweißvorgang die Schweißgeschwindigkeit $v_s$ mit einer hohen Genauigkeit ermittelt werden. Des Weiteren entfällt eine spezielle Vorbereitung zur Durchführung der Ermittlung der Schweißgeschwindigkeit $v_s$, z.B. durch spezielle Messaufbauten, da direkt durch Verwenden der Schutzeinrichtung die Detektionseinrichtung in eine entsprechende Position zur Detektion des Lichtbogenschweißvorgangs und somit zur Ermittlung der Schweißgeschwindigkeit $v_s$ gebracht werden kann.

Es werden erfindungsgemäß an den zu verbindenden Werkstücken Markierungen angebracht, wobei die Detektionseinrichtung geeignet ist zur Detektion dieser Markierungen, so dass eine gute Ermittlung der Schweißgeschwindigkeit $v_s$ aus der Detektion dieser Markierungen beim Schweißvorgang erfolgen kann.

Eine Ausgestaltung der Erfindung sieht vor, dass die Detektionseinrichtung ein optisches Aufnahmegerät umfasst.

Die optische Aufnahmegerät kann z.B. direkt in der Schutzvorrichtung integriert sein oder extern angebracht sein.

Durch die Verwendung eines optischen Aufnahmegeräts als Detektionseinrichtung zeigt sich der Vorteil, dass die Schweißgeschwindigkeit $v_s$ unabhängig von der Temperatur und dem Material des zu schweißenden Werkstücks ermittelt werden kann.

Dieses optische Aufnahmegerät kann beispielsweise eine Kamera sein.

Eine Ausgestaltung der Erfindung sieht vor, dass die Detektionseinrichtung über eine Ansteuervorrichtung mit einer Schweißenergiequelle zum uni- oder bidirektionalen Datenaustausch verbindbar ist.

Diese Ansteuervorrichtung kann beispielsweise eine drahtgebundene Ansteuervorrichtung sein, so dass z.B. über ein Datenkabel und der Ansteuervorrichtung ein Datenaustausch zwischen der Detektionseinrichtung und der Schweißenergiequelle erfolgen kann. Die Ansteuervorrichtung kann aber auch beispielsweise derart eingerichtet sein, dass ein drahtloser Datenaustausch zwischen der Detektionseinrichtung und der Schweißenergiequelle erfolgen kann.

Die Ansteuerungsvorrichtung kann beispielsweise in der Schutzvorrichtung platziert sein, oder sie kann in der Schweißenergiequelle platziert sein, oder sie kann extern platziert sein. Ist die Ansteuerungvorrichtung für einen drahtgebundenen Datenaustausch ausgelegt, so können sich jeweils an der Schutzeinrichtung und an der Schweißenergiequelle Schnittstellen zum Anschließen eines Datenkabels befinden, über das die Ansteuervorrichtung den Datenaustausch leiten kann.

Beispielsweise kann sich für einen drahtlosen Datenaustausch jeweils eine Ansteuerungsvorrichtung in der Schutzvorrichtung und in der Schweißenergiequelle befinden.

Die Ansteuervorrichtung kann ferner die Mittel zur Ermittlung der Schweißgeschwindigkeit $v_s$ umfassen und auch beispielsweise sonstige Steuer- bzw. Regelungsmittel umfassen.

Beispielsweise kann mit dem Datenaustausch die ermittelte Schweißgeschwindigkeit $v_s$ zu der Schweißenergiequelle übertragen werden, oder es können von der Schweißenergiequelle gemessene Schweißparameter wie z.B. Schweißstrom $I_s$, Schweißspannung $U_s$ oder Drahtfördergeschwindigkeit $v_d$ über die Ansteuervorrichtung zur Schutzvorrichtung oder auch nur zur Ansteuervorrichtung übertragen werden.

Eine Ausgestaltung der Erfindung sieht vor, dass eine Positionsüberprüfung der Detektionseinrichtung zu den zu verbindenden Werkstücken durchgeführt wird und die Schweißenergiequelle nur bei geeigneter Positionierung der Detektionseinrichtung zu den Werkstücken in einen schweißfähigen Zustand versetzt wird.

Diese Positionsüberprüfung kann beispielsweise durch die Detektionseinrichtung selbst bzw. mit Hilfe von einer von der Detektionseinrichtung detektierten Information durchgeführt werden, die Positionsüberprüfung kann aber auch durch andere Mittel durchgeführt werden.

Somit kann beispielweise vor Beginn eines Schweißvorgangs überprüft werden, ob die Positionierung der Detektionseinrichtung zu den zu verbindenden Werkstücken geeignet ist und somit z.B. eine hinreichend genaue Ermittlung der Schweißgeschwindigkeit $v_s$ gewährleistet ist, so dass nur bei geeigneter Positionierung die Schweißenergiequelle in den schweißfähigen Zustand versetzt wird. Somit kann vermieden werden, dass ein Schweißvorgang ohne Ermittlung der Schweißgeschwindigkeit $v_s$ durchgeführt werden kann.

Umgekehrt kann beispielsweise auch während eines Schweißvorgangs die Positionierung überprüft werden, und wenn bei einem Schweißvorgang die Detektionseinrichtung aus der geeigneten Position hinaus wegbewegt wird, so kann die Schweißenergiequelle in einen nicht schweißfähigen Zustand versetzt werden, oder es kann eine entsprechende akustische und/oder optische Warnung an den Schweißer ausgegeben werden.

Eine Ausgestaltung der Erfindung sieht vor, dass mindestens einer der Schweißparameter Schweißstrom, Schweißspannung und Drahtfördergeschwindigkeit zur Optimierung des Lichtbogenschweißvorgangs in Abhängigkeit der ermittelten Schweißgeschwindigkeit verändert wird.

Eine optimale Nahtausbildung kann beispielsweise beim Lichtbogenschweißen von verschiedenen veränderlichen Schweißparametern, wie z.B. Schweißstrom $I_s$, Schweißspannung $U_s$, Drahtfördergeschwindigkeit $v_d$ in Wechselwirkung mit der Schweißgeschwindigkeit $v_s$ abhängen. Bei einer veränderlichen Schweißgeschwindigkeit $v_s$, welche erfindungsgemäß detektiert werden kann, kann demnach durch entsprechendes Verändern eines mit der Schweißgeschwindigkeit $v_s$ bezüglich eines Optimierungskriteriums in Wechselwirkung stehenden mindestens einen Schweißparameters dieser mindestens eine Schweißparameter adaptiv so berechnet werden, dass auf Basis dieses mindestens einen neu berechneten Schweißparameters dieser mindestens eine Schweißparameter an einer Schweißenergiequelle verändert werden kann und damit weiterhin das Optimierungskriterium und somit z.B. eine gute Nahtausbildung trotz der veränderlichen Schweißgeschwindigkeit $v_s$ erfüllt wird.

Z.B. bildet eine konstante vorgebbare Streckenenergie $E = \dfrac{U_s \cdot I_s}{v_s}$ ein Optimierungskriterium für Qualität und Wirtschaftlichkeit beim Schweißen, wobei der Schweißstrom $I_s$ und die Schweißspannung $U_s$ mit der Schweißgeschwindigkeit $v_s$ in Wechselwirkung zur Streckenenergie $E$ stehen. Die vorgebbare Streckenenergie $E$ ist somit neben dem Schweißstrom $I_s$ und der Schweißspannung $U_s$ mit einer Soll-Schweißgeschwindigkeit verknüpft.

Bei einer von der Soll-Schweißgeschwindigkeit abweichenden ermittelten Ist-Schweißgeschwindigkeit $v_s$ kann beispielsweise mindestens einer der Schweißparameter $I_s$, $U_s$ hinsichtlich einer vorgebbaren Streckenenergie $E = \dfrac{U_s \cdot I_s}{v_s}$ verändert werden, so dass eine vorgebbare Streckenenergie auch bei sich veränderlicher Schweißgeschwindigkeit $v_s$ konstant oder

nahezu konstant gehalten werden kann. Die vorgebbare Streckenenergie kann hierbei von der jeweiligen Schweißaufgabe abhängen.

Beispielsweise kann der Schweißstrom $I_s$ und/oder die Schweißspannung $U_s$ in Abhängigkeit der momentan ermittelten Ist-Schweißgeschwindigkeit $v_s$ zur Einhaltung einer vorgebbaren Streckenenergie $E$ an einer Schweißenergiequelle verändert werden, so dass der Schweißstrom $I_s$ und/oder die Schweißspannung $U_s$ adaptiv in Abhängigkeit von der ermittelten Schweißgeschwindigkeit $v_s$ angepasst werden kann und somit die Streckenenergie $E$ unabhängig von der Schweißgeschwindigkeit $v_s$ konstant gehalten wird.

Des Weiteren können die Schweißparameter beispielsweise auch hinsichtlich des für eine Schweißaufgabe vorgegebenen a-Maßes, welches eine Maßangabe für den Schweißnahtquerschnitt darstellt, verändert werden. Das a-Maß ist mit den bekannten Parametern dem Querschnitt des Zusatzmaterials $A_z$, der Drahtvorschubgeschwindigkeit $v_d$ und der ermittelten Schweißgeschwindigkeit $v_s$ über die Gleichung

$$a^2 = \frac{A_z \cdot v_d}{v_s}$$

verknüpft. Das vorgebbare a-Maß ist somit neben der Drahtvorschubgeschwindigkeit $v_d$ und dem Querschnitt des Zusatzmaterials $A_z$ mit einer Soll-Schweißgeschwindigkeit verknüpft.

Bei einer von der Soll-Schweißgeschwindigkeit abweichenden ermittelten Ist-Schweißgeschwindigkeit $v_s$ kann beispielsweise die Drahtvorschubgeschwindigkeit $v_d$ in Abhängigkeit der momentan ermittelten Ist-Schweißgeschwindigkeit $v_s$ zur Einhaltung eines vorgebbaren a-Maßes verändert werden, so dass die Drahtvorschubgeschwindigkeit $v_d$ adaptiv in Abhängigkeit von der ermittelten Ist-Schweißgeschwindigkeit $v_s$ verändert werden kann und somit das a-Maß während des Schweißvorganges konstant eingehalten werden kann.

Es können auch weitere Optimierungskriterien bezüglich einer Schweißqualität zur Bestimmung von mindestens einem Schweißparameter in Abhängigkeit der ermittelten Schweißgeschwindigkeit $v_s$ verwendet werden. Ferner können beispielsweise auch mehrere Optimierungskriterien miteinander kombiniert werden.

Durch das Verändern von mindestens einem der Schweißparameter Schweißstrom $I_s$, Schweißspannung $U_s$ und Drahtfördergeschwindigkeit $v_d$ in Abhängigkeit der ermittelten Schweißgeschwindigkeit $v_s$ kann somit der Lichtbogenschweißvorgang weiterhin optimal durchgeführt werden, auch wenn sich die Schweißgeschwindigkeit $v_s$ aufgrund eines manuell durchgeführten Schweißvorgangs verändert. Somit kann trotz schwankender Schweißgeschwindigkeit $v_s$ eine optimale Nahtausbildung durch adaptive Bestimmung mindestens ei-

nen der Schweißparameter Schweißstrom $I_s$, Schweißspannung $U_s$ und Drahtfördergeschwindigkeit $v_d$ erzielt werden.

Eine Ausgestaltung der Erfindung sieht vor, dass mindestens einer der Schweißparameter zur Einhaltung einer vorgebbaren Streckenenergie und/oder zur Einhaltung eines vorgebbaren a-Maßes verändert wird.

Eine Ausgestaltung der Erfindung sieht vor, dass eine Schweißenergiequelle durch mindestens einen der bestimmten Schweißparameter angesteuert wird.

Somit kann beispielsweise die Schweißenergiequelle auf Grundlage des mindestens einen der veränderten Schweißparameter permanent während eines Schweißvorgangs nachgeregelt werden.

Hierdurch können beispielsweise in Echtzeit die für einen Schweißprozess optimalen Schweißparameter Schweißstrom $I_s$, Schweißspannung $U_s$ und Drahtfördergeschwindigkeit $v_d$ in Abhängigkeit der Schweißgeschwindigkeit $v_s$ verändert werden.

Verlaufen z.B. die Fügekonturen einer Schweißnaht in geometrischen Bahnen, die stark von der Geraden abweichen, so kann die Schweißgeschwindigkeit $v_s$ bei einem manuell von einer Person ausgeführten Schweißvorgang normalerweise nicht konstant gehalten werden. Durch Veränderung der Schweißparameter in Abhängigkeit der momentanen Schweißgeschwindigkeit $v_s$ in Echtzeit kann somit z.B. dennoch die Streckenenergie und/oder das a-Maß konstant gehalten werden und somit eine hervorragende Schweißqualität sichergestellt werden.

Eine Ausgestaltung der Erfindung sieht vor, dass ein Überschreiten der Schweißgeschwindigkeit über einen ersten Grenzwert und/oder ein Unterschreiten der Schweißgeschwindigkeit unter einen zweiten Grenzwert mindestens ein akustisches Signal auslöst.

Hierzu kann ein akustisches Signalmittel z.B. an oder in der Schutzvorrichtung angebracht sein oder auch extern hiervon platziert. Beispielsweise kann das akustische Signalmittel z.B. bei einer detektierten Überschreitung, d.h. bei einer zu hohen Schweißgeschwindigkeit $v_s$, ein akustisches Warnsignal abgeben, und/oder das akustische Signalmittel kann z.B. bei einer detektierten Unterschreitung, d.h. bei einer zu niedrigen Schweißgeschwindigkeit $v_s$, ein anderes akustisches Warnsignal abgeben werden.

Somit kann eine schweißende Person bei Unter- bzw. Überschreiten eines zulässigen Schweißgeschwindigkeitsfensters, welches durch den ersten und zweiten Grenzwert bestimmt wird und z.B. in Abhängigkeit eines bestimmten Schweißvorganges bestimmt werden kann, durch das jeweilige akustische Warnsignal über die zu hohe bzw. zu niedrige Schweißgeschwindigkeit $v_s$ informiert werden, so dass die Person den manuellen Schweißvorgang dementsprechend anpassen kann.

Eine Ausgestaltung der Erfindung sieht vor, dass eine Werkstücktemperatur $T_w$ aus dem detektierten Lichtbogenschweißvorgang ermittelt wird.

Die Detektionseinrichtung ist dabei derart eingerichtet, dass Informationen über den Lichtbogenschweißvorgang detektiert werden und aus diesen Information die Werkstücktemperatur $T_w$ eines bei dem Schweißvorgang zu schweißenden Werkstückes ermittelt werden kann.

Beispielsweise kann die Detektionseinrichtung spezielle Mittel zur Temperaturdetektion aufweisen, wie z.B. einen Temperatursensor, oder die Detektionseinrichtung kann beispielsweise Infrarotaufnahmemittel aufweisen, wobei sich aus der detektierten Infrarotinformation beispielsweise ein Wärmebild bestimmen und daraus die Werkstücktemperatur $T_w$ ermitteln lässt. Es können jedoch auch andere Detektionsverfahren verwenden werden mit denen sich die Werkstücktemperatur $T_w$ ermitteln lässt.

Eine Ausgestaltung der Erfindung sieht vor, dass ein Überschreiten der Werkstücktemperatur $T_w$ über einen ersten Grenzwert und/oder ein Unterschreiten der Werkstücktemperatur $T_w$ unter einen zweiten Grenzwert mindestens ein akustisches Signal auslöst.

Zur Ausgabe des akustischen Signals können beispielsweise die zuvor genannten akustischen Signalmittel mit verwendet werden, wobei sich die akustischen Signale bei Unter- bzw. Überschreiten der Werkstücktemperatur $T_w$ von den akustischen Signalen bei Unter- bzw. Überschreiten der Schweißgeschwindigkeit $v_s$ unterscheiden.

Somit kann eine schweißende Person bei Unter- bzw. Überschreiten eines zulässigen Werkstücktemperaturfensters, welches durch den ersten und zweiten Grenzwert bestimmt wird und z.B. in Abhängigkeit eines bestimmten Schweißvorganges bestimmt werden kann, durch das jeweilige akustische Warnsignal über die zu hohe bzw. zu niedrige Werkstücktemperatur $T_w$ informiert werden, so dass die Person den manuellen Schweißvorgang dementsprechend anpassen kann.

Eine Ausgestaltung der Erfindung sieht vor, dass die bewegliche Schutzvorrichtung eine Anzeigevorrichtung umfasst, auf welcher mindestens einer der Momentanwerte Schweißgeschwindigkeit $v_s$, Schweißstrom $I_s$, Schweißspannung $U_s$, Werkstücktemperatur $T_w$ und Drahtfördergeschwindigkeit $v_d$ des Lichtbogenschweißvorgangs angezeigt wird.

Die Werkstücktemperatur $T_w$ kann beispielsweise wie zuvor erläutert aus dem detektierten Lichtbogenschweißvorgang ermittelt werden.

Somit kann einer schweißenden Person dieser mindestens eine Momentanwert angezeigt werden, so dass die schweißende Person beispielsweise die Qualität des Schweißvorgangs in Abhängigkeit dieser Momentanwerte überwachen kann.

Die Anzeigevorrichtung kann hierfür mit der Ansteuervorrichtung zum Datenaustausch mit der Schweißenergiequelle verbunden sein, so dass z.B. mindestens einer der Momentanwerte Schweißstrom $I_s$, Schweißspannung $U_s$, Werkstücktemperatur $T_w$ und Drahtfördergeschwindigkeit $v_d$ von der Schweißenergiequelle zu der Anzeigevorrichtung übertragen werden können.

Eine Ausgestaltung der Erfindung sieht vor, dass ein Überschreiten der Schweißgeschwindigkeit über einen ersten Grenzwert und/oder ein Unterschreiten der Schweißgeschwindigkeit unter einen zweiten Grenzwert grafisch in der Anzeigevorrichtung dargestellt wird.

So kann z.B. eine zu hohe Schweißgeschwindigkeit durch einen ersten Pfeil in der Anzeigevorrichtung angezeigt werden, und eine zu niedrige Schweißgeschwindigkeit kann durch einen zweiten entgegengesetzten Pfeil angezeigt werden.

Eine Ausgestaltung der Erfindung sieht vor, dass ein Überschreiten der Werkstücktemperatur über einen ersten Grenzwert und/oder ein Unterschreiten der Werkstücktemperatur unter einen zweiten Grenzwert grafisch in der Anzeigevorrichtung dargestellt wird.

So kann z.B. eine zu hohe Schweißgeschwindigkeit durch einen ersten Pfeil in der Anzeigevorrichtung angezeigt werden, und eine zu niedrige Schweißgeschwindigkeit kann durch einen zweiten entgegengesetzten Pfeil angezeigt werden.

Eine Ausgestaltung der Erfindung sieht vor, dass die Schutzvorrichtung einen ein Visier umfassenden Schutzhelm darstellt, und das Visier mit der Anzeigevorrichtung versehen ist.

Somit liegt die Anzeigevorrichtung direkt im Blickfeld einer schweißenden Person, wenn diese den Schutzhelm für den Schweißvorgang aufsetzt. Die schweißende Person kann sich somit voll auf den Schweißvorgang konzentrieren.

Ferner kann beispielsweise die Detektionseinrichtung auf der Visierseite des Schutzhelms angebracht bzw. integriert sein.

Eine Ausgestaltung der Erfindung sieht vor, dass mindestens einer der Momentanwerte Schweißge-schwindigkeit, Schweißstrom, Schweißspannung, Werk-stücktemperatur und Drahtfördergeschwindigkeit des Lichtbogenschweißvorgangs in einem Datenspeicher gespeichert wird.

Dieser Datenspeicher kann sich beispielsweise in der Schutzvorrichtung oder auch in der Schweißenergiequelle befinden. Die in dem Datenspeicher abgelegten Momentanwerte können anschließend wieder abgerufen werden, z.B. zu Dokumentationszwecken wie z.B. zum Nachweis der Güte des erfolgten Schweißvorganges. Beispielsweise kann der Datenspeicher über Funk beschreibbar und/oder auslesbar sein.

KURZE BESCHREIBUNG DER FIGUREN

Die Erfindung wird im Folgenden anhand von Ausführungsbeispiele zeigenden Zeichnungen näher erläutert.

Dabei zeigen:

Fig. 1: Eine schematische Darstellung einer ersten exemplarischen Ausführungsform einer erfindungsgemäßen Vorrichtung;

Fig. 2: Eine schematische Darstellung eines Flussdiagramms eines exemplarischen Verfahrens der vorliegenden Erfindung;

Fig. 3: Eine schematische Darstellung einer zweiten exemplarischen Ausführungsform einer erfindungsgemäßen Vorrichtung;

Fig. 4: Eine schematische Darstellung einer exempla-rischen Ausführungsform einer erfindungsge-mäßen Anzeigevorrichtung.

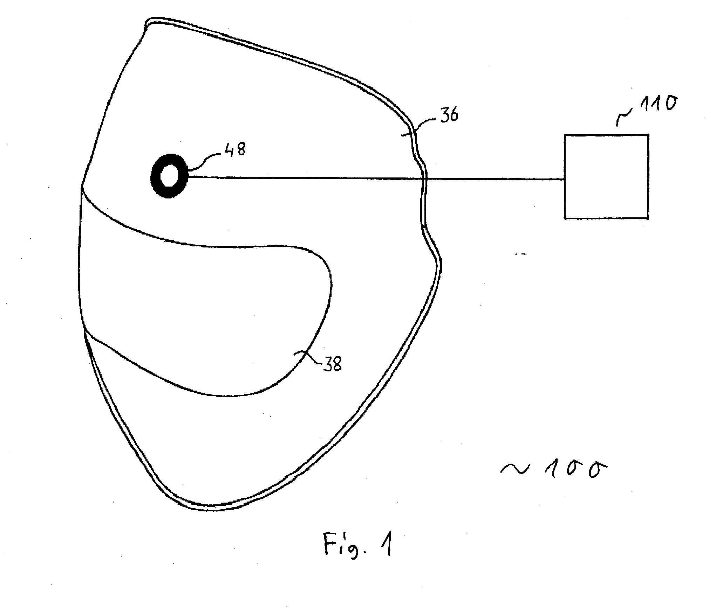

Figur 1 zeigt eine schematische Darstellung einer ersten exemplarischen Ausführungsform einer erfindungsgemäßen Vorrichtung 100 zur Ermittlung einer Schweißgeschwindigkeit bei einem Lichtbogenschweißvorgang. Der Begriff Lichtbogenschweißvorgang kann auch einen Lichtbogenlötvorgang umfassen.

Die Vorrichtung 100 umfasst eine an einer be-weglichen Schutzvorrichtung 36 angebrachte Detekti-onseinrichtung 48 zur Detektion des Lichtbogenschweißvorgangs und Mittel 110 zur Ermitt-lung der Schweißgeschwindigkeit $v_s$ aus dem detektier-ten Lichtbogenschweißvorgang.

Auf Basis des detektierten Lichtbogenschweißvorgangs ermitteln die Mittel 110 zur Ermittlung der Schweißgeschwindigkeit $v_s$ die momen-tane Schweißgeschwindigkeit $v_s$ des Lichtbogen-schweißvorgangs.

Generell ist die Detektionseinrichtung 48 derart eingerichtet, dass Information über den Lichtbogenschweißvorgang detektiert werden, wobei diese Informationen dazu geeignet, dass die Mittel 110 zur Ermittlung der Schweißgeschwindigkeit $v_s$ die momentane Schweißgeschwindigkeit $v_s$ aus diesen Informationen er-mitteln können.

Die bewegliche Schutzvorrichtung stellt eine Schutzvorrichtung dar 36, die von einer schweißenden Person zum Schutz insbesondere vor schädlicher Strahlung getragen werden kann.

Beispielsweise kann die bewegliche Schutzvorrichtung 36 ein Schutzhelm 36 sein, welcher von einer schweißenden Person aufgesetzt wird, oder die bewegliche Schutzvorrichtung 36 kann ein Schutzvisier sein, welches von einer schweißenden Person bei einem Schweißvorgang vor das Gesicht gehalten wird.

Durch die Anbringung der Detektionseinrichtung 48 an der beweglichen Schutzvorrichtung 36 kann somit gewährleistet werden, dass die Detektionseinrichtung 48 bei einem Lichtbogenschweißvorgang durch die Verwendung der beweglichen Schutzvorrichtung auto-matisch auf den Lichtbogenschweißvorgang ausgerich-tet wird und somit eine gute Detektion des Lichtbogenschweißvorgangs erfolgt.

Somit kann auch bei einem manuell durchgeführten Schweißvorgang die Schweißgeschwindigkeit $v_s$ mit einer hohen Genauigkeit ermittelt werden. Des Weiteren entfällt eine spezielle Vorbereitung zur Durchführung der Ermittlung der Schweißgeschwindigkeit $v_s$, z.B. durch spezielle Messaufbauten, da direkt durch Verwenden der Schutzeinrichtung 36 die Detektionseinrichtung 48 in eine entsprechende Position zur Detektion des Lichtbogenschweißvorgangs und somit zur Ermittlung der Schweißgeschwindigkeit $v_s$ gebracht werden kann.

Ferner kann die Detektionseinrichtung 48 auch dazu eingerichtet sein, dass auf Grundlage des detektierten Schweißvorgangs die Werkstücktemperatur $T_w$ ermittelt werden kann.

Beispielsweise kann die Detektionseinrichtung 48 spezielle Mittel zur Temperaturdetektion aufweisen, wie z.B. einen Temperatursensor, oder die Detektionseinrichtung 48 kann beispielsweise Infrarotaufnahmemittel aufweisen, wobei sich aus der detektierten Infrarotinformation beispielsweise ein Wärmebild bestimmen und daraus die Werkstücktemperatur $T_w$ ermitteln lässt. Es können jedoch auch andere Detektionsverfahren bzw. Mittel verwenden werden mit denen sich die Werkstücktemperatur $T_w$ ermitteln lässt.

Somit kann beispielsweise eine schweißende Person auf Grundlage der ermittelten Werkstücktemperatur $T_w$ den manuellen Schweißvorgang anpassen, so dass z.B. eine Mindestwerkstücktemperatur nicht unterschritten und/oder eine Maximalwerkstücktemperatur nicht überschritten wird.

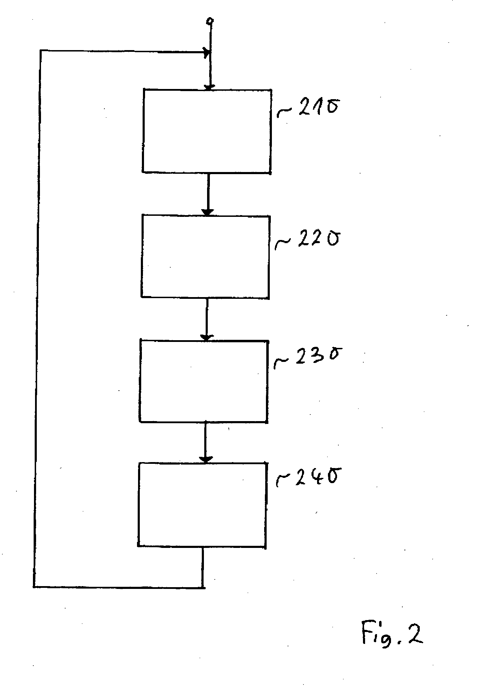

Die Figur 2 zeigt eine schematische Darstellung eines Flussdiagramms eines exemplarischen Verfahrens der vorliegenden Erfindung.

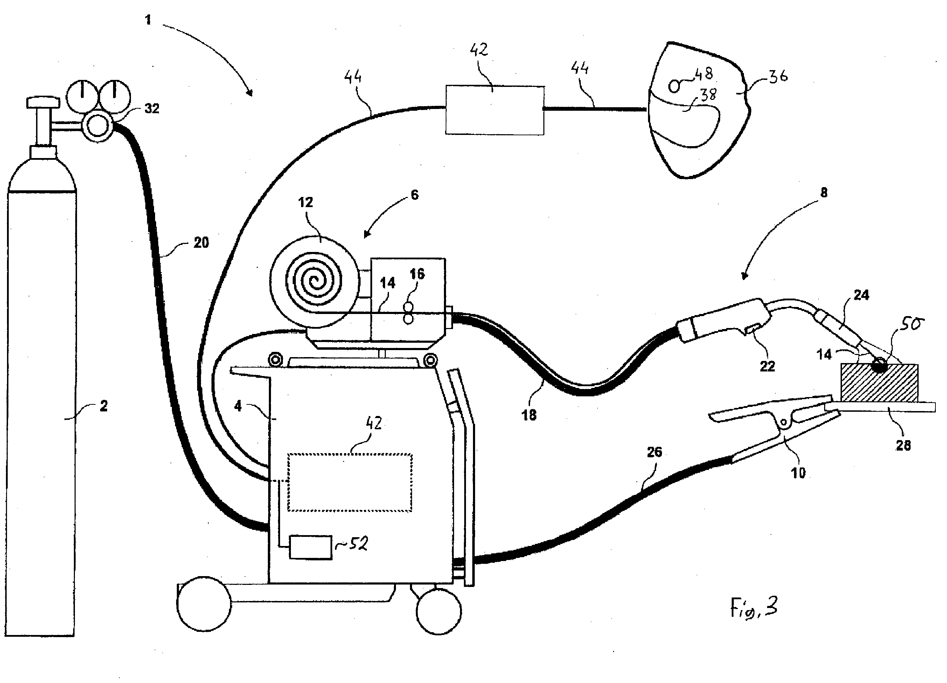

Dieses Verfahren wird im Folgenden unter Zuhilfenahme der in Figur 3 gezeigten schematischen Darstellung einer zweiten exemplarischen Ausführungsform einer erfindungsgemäßen Vorrichtung zur Ermittlung einer Schweißgeschwindigkeit $v_s$ bei einem mit Hilfe der Schweißvorrichtung 1 manuell ausgeführtem Lichtbogenschweißvorgang erläutert.

Diese zweite exemplarische Ausführungsform einer erfindungsgemäßen Vorrichtung basiert auf der in Figur 1 dargestellten ersten exemplarischen Ausführungsform, so dass die zuvor genannten Erläuterungen und Vorteile gleichermaßen für diese zweite exemplarische Ausführungsform gelten.

Die in Figur 3 dargestellte Schweißvorrichtung 1 dient zum manuellen Lichtbogenschweißen, wobei der Schweißvorgang durch manuelle Bewegung des Bedienelements 22 und somit Führung der aus der Schutzgasdüse 24 geförderten Drahtelektrode 14 entlang einer Schweißnaht erfolgt.

Im Schritt 210 des in Figur 2 dargestellten Verfahrenablaufes wird mit der an der beweglichen Schutzvorrichtung 36 angebrachten Detektionseinrichtung 48 der Lichtbogenschweißvorgang 50 detektiert. Die bewegliche Schutzvorrichtung 36 stellt einen Schutzhelm dar, welcher ein Visier 38 aufweist.

Die Detektionseinrichtung 48 stellt in dieser zweiten exemplarischen Ausführungsform eine Kamera 48 dar, mit welcher der Lichtbogenschweißvorgang 50 optisch detektiert werden kann. Die Kamera 48 kann z.B. in dem Schutzhelm 36 integriert sein oder außen angebracht sein. Durch die Verwendung einer Kamera 48 als Detektionseinrichtung 48 zeigt sich der Vorteil, dass die Schweißgeschwindigkeit $v_s$ unabhängig von der Temperatur und dem Material des Werkstücks ermittelt werden kann.

Es sind an den zu verbindenden Werkstücken Markierungen angebracht sein, welche zur Ermittlung der Schweißgeschwindigkeit $v_s$ dienen können.

Des Weiteren ist der Schutzhelm 36 über ein Datenkabel 44 und die Ansteuervorrichtung 42 mit der Schweißenergiequelle 4 verbunden, so dass ein Datenaustausch zwischen der Kamera 48 und der Schweißenergiequelle 4 erfolgen kann. Die Ansteuervorrichtung 42 kann sich an dem Schutzhelm 36 befinden, sie kann sich aber auch in der Schweißenergiequelle 4 befinden, wie in Fig. 3 mit der gestrichelt dargestellten Ansteuervorrichtung 42 gezeigt.

Anschließend wird im Schritt 220 aus dem detektierten Lichtbogenschweißvorgang die Schweißgeschwindigkeit $v_s$ ermittelt. Die in Fig. 1 dargestellten Mittel 110 zur Ermittlung der Schweißgeschwindigkeit $v_s$ können sich beispielsweise in der Ansteuervorrichtung 42 befinden, sie können aber auch z.B. im Schutzhelm 36 oder in der Schweißenergiequelle 4 oder an einer anderen geeigneten Stelle platziert werden.

In Schritt 230 wird mindestens einer der Schweißparameter Schweißstrom $I_s$, Schweißspannung $U_s$ und Drahtfördergeschwindigkeit $v_d$ zur Optimierung des Lichtbogenschweißvorgangs in Abhängigkeit der ermittelten Schweißgeschwindigkeit $v_s$ verändert.

Ziel dieser Optimierung des Lichtbogenschweißvorgangs ist eine optimale Nahtausbildung.

Z.B. können die Schweißparameter hinsichtlich einer vorgebbaren Streckenenergie

$$E = \frac{U_s \cdot I_s}{v_s}$$

verändert werden, so dass eine vorgebbare Streckenenergie auch bei sich veränderlicher Schweißgeschwindigkeit $v_s$ konstant oder nahezu konstant gehalten werden kann. Die vorgebbare Streckenenergie kann hierbei von der jeweiligen Schweißaufgabe abhängen. Somit kann beispielsweise der Schweißstrom $I_s$ und/oder die Schweißspannung $U_s$ in Abhängigkeit der momentan ermittelten Schweißgeschwindigkeit $v_s$ zur Einhaltung einer vorgebbaren Streckenenergie E bestimmt werden, so dass der Schweißstrom $I_s$ und/oder die Schweißspannung $U_s$ adaptiv in Abhängigkeit der ermittelten Schweißgeschwindigkeit $v_s$ angepasst werden kann.

Bezogen auf die in Figur 3 dargestellte Vorrichtung kann somit der über die Versorgungskabel 18, 26 und die Kontaktzange 10 fließende Schweißstrom $I_s$ in Abhängigkeit der ermittelten Schweißgeschwindigkeit $v_s$ angepasst werden, und/oder die Schweißspannung $U_s$ kann adaptiv in Abhängigkeit der ermittelten Schweißgeschwindigkeit $v_s$ angepasst werden.

Des Weiteren können die Schweißparameter hinsichtlich des für eine Schweißaufgabe vorgegebenen a-Maßes, welches eine Maßangabe für den Schweißnahtquerschnitt darstellt, verändert werden. Das a-Maß ist mit den bekannten Parametern dem Querschnitt des Zusatzmaterials $A_z$, der Drahtvorschubgeschwindigkeit $v_d$ und der ermittelten Schweißgeschwindigkeit $v_s$ über die Gleichung

$$a^2 = \frac{A_z \cdot v_d}{v_s}$$

verknüpft. Somit kann beispielsweise die Drahtvorschubgeschwindigkeit $v_d$ in Abhängigkeit der momentan ermittelten Schweißgeschwindigkeit $v_s$ zur Einhaltung eines vorgebbaren a-Maßes bestimmt werden, so dass die Drahtvorschubgeschwindigkeit $v_d$ adaptiv in Abhängigkeit der ermittelten Schweißgeschwindigkeit $v_s$ angepasst werden kann.

Im Flussdiagramm der Figur 2 erfolgt dieses Ansteuern der Schweißenergiequelle 4 durch mindestens einen der veränderten Schweißparameter in Schritt 240, so dass der Schweißvorgang entsprechend dem mindestens einen Schweißparameter in Abhängigkeit der ermittelten momentanen Schweißgeschwindigkeit $v_s$ angepasst wird.

Somit können auch bei einem nicht automatisierten Schweißvorgang die einzelnen Schweißparameter in Abhängigkeit der ermittelten momentanen Schweißgeschwindigkeit $v_s$ angepasst werden, so dass Schwankungen in der Schweißgeschwindigkeit $v_s$ kompensiert werden können und somit die Qualität und die Wirtschaftlichkeit des Schweißvorgangs gewährleistet werden kann.

Weiterhin kann durch die erfindungsgemäße der Wärmeeintrag Q optimal gesteuert werden, wodurch Schrumpfung, Verzug und Eigenspannung vermindert werden können. Zudem kann eine optimale Nahtausbildung bei geringem Zeitaufwand sowie ein minimaler Verbrauch an Zusatzmaterial gewährleistet werden.

Die Schweißgeschwindigkeit $v_s$ kann während eines Schweißvorgangs permanent kontrolliert werden, so dass der mindestens eine Schweißparameter permanent der momentanen Schweißgeschwindigkeit $v_s$ angepasst wird, wie in Figur 2 dargestellt.

Verlaufen z.B. die Fügekonturen einer Schweißnaht in geometrischen Bahnen, die stark von der Geraden abweichen, so kann die Schweißgeschwindigkeit $v_s$ bei einem manuell von einer Person ausgeführten Schweißvorgang normalerweise nicht konstant gehalten werden. Durch Ermittlung der optimalen Schweißparameter in Abhängigkeit der momentanen Schweißgeschwindigkeit $v_s$ in Echtzeit kann somit z.B. dennoch die Streckenenergie und/oder das a-Maß konstant gehalten werden und somit eine hervorragende Schweißqualität sichergestellt werden.

Des Weiteren kann detektiert werden, ob die Schweißgeschwindigkeit $v_s$ einen vorgebbaren ersten Grenzwert überschreitet und/oder ob die Schweißgeschwindigkeit $v_s$ einen vorgebbaren zweiten Grenzwert unterschreitet.

Bei einer detektierten Überschreitung, d.h. bei einer zu hohen Schweißgeschwindigkeit, kann z.B. von einem optionalem akustischen Signalmittel (nicht in Fig. 3 dargestellt) der erfindungsgemäßen Vorrichtung ein akustisches Warnsignal abgegeben werden, und umgekehrt kann bei einer detektierten Unterschreitung, d.h. bei einer zu niedrigen Schweißgeschwindigkeit, von dem akustischen Signalmittel ein anderes akustisches Warnsignal abgeben werden. Somit kann eine schweißende Person bei Unter- bzw. Überschreiten eines zulässigen Schweißgeschwindigkeitsfensters durch das jeweilige akustische Warnsignal über die zu hohe bzw. zu niedrige Schweißgeschwindigkeit informiert werden, so dass die Person den manuellen Schweißvorgang dementsprechend anpassen kann. Das akustische Signalmittel kann beispielsweise im Schutzhelm 36 platziert sein.

Diese Signalmittel können ferner auch zur Ausgabe von akustischen Warnsignalen bezüglich einer ermitteln Werkstücktemperatur $T_W$ verwendet werden, wobei bei einem Überschreiten der Werkstücktemperatur $T_W$ über einen ersten Grenzwert und/oder bei einem Unterschreiten der Werkstücktemperatur $T_W$ unter einen zweiten Grenzwert mindestens ein akustisches Warnsignal abgegeben wird.

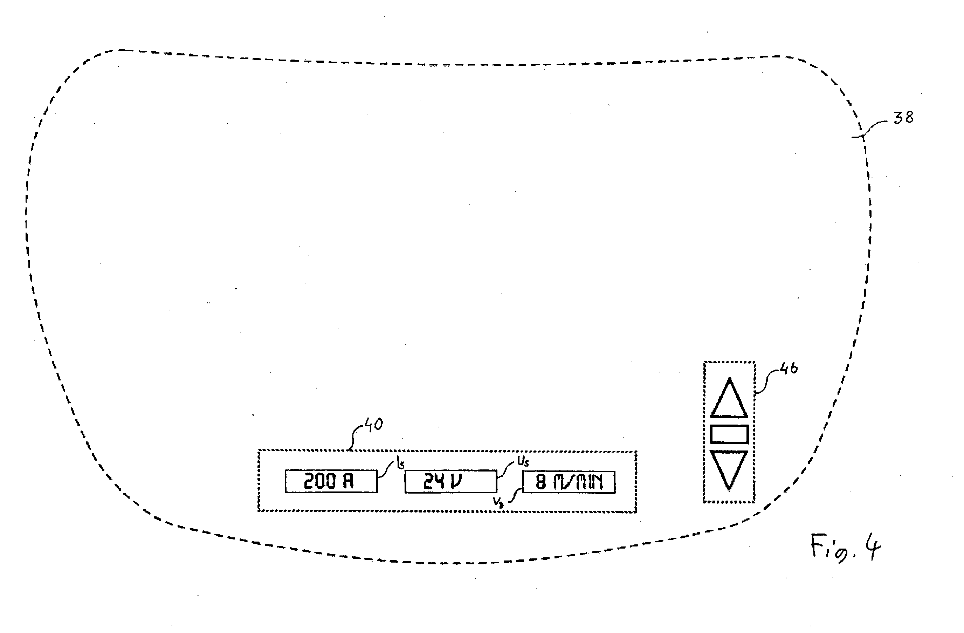

Des Weiteren kann das Visier 38 des Schutzhelms 36 eine Anzeigevorrichtung 40,46 umfassen, welche exemplarisch in Fig. 4 dargestellt ist.

Auf dieser Anzeigevorrichtung 40 kann mindestens einer der Momentanwerte Schweißgeschwindigkeit $v_s$, Schweißstrom $I_s$, Schweißspannung $U_s$ und Drahtfördergeschwindigkeit $v_d$ des Lichtbogenschweißvorgangs angezeigt werden.

Somit können einer schweißenden Person diese Momentanwerte direkt im Blickfeld des Visiers 38 angezeigt werden, so dass die schweißende Person die Momentanwerte und somit die Qualität des Schweißvorgangs überwachen kann.

Beispielhaft werden in der in Figur 4 dargestellten Anzeigevorrichtung 40 die Momentanwerte Schweißgeschwindigkeit $v_s$, Schweißstrom $I_s$ und Schweißspannung $U_s$ angezeigt. In dieser Anzeigevorrichtung 40 kann aber auch beispielsweise zusätzlich ein ermittelter Momentanwert der Werkstücktemperatur $T_w$ angezeigt werden.

Des Weiteren kann die zuvor erläuterte detektierte Über- bzw. Unterschreitung der Schweißgeschwindigkeit $v_s$ auch durch eine grafische Anzeige in der Anzeigevorrichtung 46 dargestellt werden. So kann z.B. eine zu hohe Schweißgeschwindigkeit durch einen ersten Pfeil angezeigt werden, und eine zu niedrige Schweißgeschwindigkeit kann durch einen zweiten entgegengesetzten Pfeil angezeigt werden, wie beispielhaft in Fig. 4 dargestellt. Diese grafische Anzeige einer Über- bzw. Unterschreitung kann beispielsweise mit der zuvor erläuterten akustischen Warnung kombiniert werden.

Ferner kann die zuvor erläuterte detektierte Über- bzw. Unterschreitung der Werkstücktemperatur $T_w$ auch durch eine grafische Anzeige z.B. in der Anzeigevorrichtung 46 dargestellt werden. So kann beispielsweise eine zu hohe Werkstücktemperatur durch einen ersten Pfeil angezeigt werden, und eine zu niedrige Werkstücktemperatur kann durch einen zweiten entgegengesetzten Pfeil angezeigt werden. Diese grafische Anzeige einer Über- bzw. Unterschreitung kann beispielsweise mit der zuvor erläuterten akustischen Warnung kombiniert werden. Beispielsweise können für die Werkstücktemperaturwarnanzeige die gleichen Pfeile wie bei der Schweißgeschwindigkeitswarnanzeige verwendet werden, wobei z.B. bei der Werkstücktemperaturwarnanzeige eine andere Farbe verwendet wird. Es können jedoch auch verschiedene Pfeile für die Schweißgeschwindigkeitswarnanzeige und die Werkstücktemperaturwarnanzeige verwendet werden (nicht in Fig. 4 dargestellt).

Die Anzeigevorrichtung 40,46 im Visier 38 kann beispielsweise ein Display sein.

Des Weiteren kann die erfindungsgemäße Vorrichtung einen Datenspeicher 52 zum Speichern von mindestens einem der Momentanwerte Schweißgeschwindigkeit $v_s$, Schweißstrom $I_s$, Werkstücktemperatur $T_w$, Schweißspannung $U_s$ und Drahtfördergeschwindigkeit $v_d$ des Lichtbogenschweißvorgangs umfassen. Dieser Datenspeicher 52 kann sich z.B. im Schutzhelm 36 oder auch in der Schweißenergiequelle 4 befinden, wie exemplarisch in Fig. 3 dargestellt. Die in dem Datenspeicher 52 abgelegten Momentanwerte können anschließend wieder abgerufen werden, z.B. zu Dokumentationszwecken wie z.B. zum Nachweis der Güte des erfolgten Schweißvorganges. Beispielsweise kann der Datenspeicher 52 über Funk beschreibbar und/oder auslesbar sein.

Somit kann beispielweise die Ansteuervorrichtung 42 derart eingerichtet sein, dass vor Beginn eines Schweißvorgangs überprüft wird, ob die Positionierung der Detektionseinrichtung 48 zu den zu verbindenden Werkstücken geeignet ist und somit z.B. eine hinreichend genaue Ermittlung der Schweißgeschwindigkeit $v_s$ gewährleistet ist, so dass nur bei geeigneter Positionierung die Schweißenergiequelle 4 in den schweißfähigen Zustand versetzt wird. Somit kann vermieden werden, dass ein Schweißvorgang ohne Ermittlung der Schweißgeschwindigkeit $v_s$ durchgeführt werden kann.

Umgekehrt kann beispielsweise auch während eines Schweißvorgangs die Positionierung überprüft werden, und wenn bei einem Schweißvorgang die Detektionseinrichtung 48 aus der geeigneten Position hinaus wegbewegt werden, so kann dies der schweißenden Person beispielsweise zunächst akustisch und/oder optisch mitgeteilt werden und ab einem vorgebbaren Grenzwert kann die Schweißenergiequelle 4 in einen nicht schweißfähigen Zustand versetzt werden, d.h. der Schweißvorgang wird unterbrochen.

**Patentansprüche**

1.    Verfahren zur Ermittlung einer Schweißgeschwindigkeit ($v_s$) bei einem manuell ausgeführten Lichtbogenschweißvorgang (50), umfassend:

- Detektieren von auf durch den Lichtbogenschweißvorgang (50) zu verbindenden Werkstücken angebrachten Markierungen durch eine an einer beweglichen Schutzvorrichtung (36), die von einem Schweißer zum Schutz tragbar ist, insbesondere Schweißschutzhelm (36), angebrachte optische Detektionseinrichtung (48), und
- Ermitteln der Schweißgeschwindigkeit ($v_s$) aus der Detektion der Markierungen.

2.    Verfahren nach Anspruch 1, **dadurch gekennzeichnet, dass** die, insbesondere ein optisches Aufnahmegerät umfassende, Detektionseinrichtung (48) über eine Ansteuervorrichtung (42) mit einer Schweißenergiequelle (4) zum uni- oder bidirektionalen Datenaustausch verbindbar ist.

3.    Verfahren nach Anspruch 2, **dadurch gekennzeichnet, dass** eine Positionsüberprüfung der Detektionseinrichtung (48) zu den zu verbindenden Werkstücken durchgeführt wird und die Schweißenergiequelle (4) nur bei geeigneter Positionierung der Detektionseinrichtung (48) zu den Werkstücken in einen schweißfähigen Zustand versetzt wird.

4.    Verfahren nach einem der vorangegangenen Ansprüche, **dadurch gekennzeichnet, dass** mindestens einer der Schweißparameter Schweißstrom ($I_s$), Schweißspannung ($U_s$) und Drahtfördergeschwindigkeit ($v_d$) zur Optimierung des Lichtbogenschweißvorgangs (50) in Abhängigkeit der ermittelten Schweißgeschwindigkeit ($v_s$) verändert wird.

5.    Verfahren nach Anspruch 4, **dadurch gekennzeichnet, dass** mindestens einer der Schweißparameter zur Einhaltung einer vorgebbaren Streckenenergie und/oder zur Einhaltung eines vorgebbaren a-Maßes verändert wird.

6.    Verfahren nach Anspruch 4 oder 5, **dadurch gekennzeichnet, dass** eine Schweißenergiequelle (4) durch mindestens einen der veränderten Schweißparameter angesteuert wird.

7. Verfahren nach einem der vorangegangenen Ansprüche, **dadurch gekennzeichnet, dass** ein Überschreiten der Schweißgeschwindigkeit ($v_s$) über einen ersten Grenzwert und/oder ein Unterschreiten der Schweißgeschwindigkeit ($v_s$) unter einen zweiten Grenzwert mindestens ein akustisches Signal auslöst.

8. Verfahren nach einem der vorangegangenen Ansprüche, **dadurch gekennzeichnet, dass** eine Werkstücktemperatur ($T_w$) durch Detektion des Lichtbogenschweißvorgang (50) ermittelt wird.

9. Verfahren nach Anspruch 8, **dadurch gekennzeichnet, dass** ein Überschreiten der Werkstücktemperatur ($T_w$) über einen ersten Grenzwert und/oder ein Unterschreiten der Werkstücktemperatur ($T_w$) unter einen zweiten Grenzwert mindestens ein akustisches Signal auslöst.

10. Verfahren nach einem der vorangegangenen Ansprüche, **dadurch gekennzeichnet, dass** die bewegliche Schutzvorrichtung (36) eine Anzeigevorrichtung (40,46) umfasst, auf welcher mindestens einer der folgenden Momentanwerte des Lichtbogenschweißvorgangs (50) angezeigt wird:

   - Schweißgeschwindigkeit ($v_s$),
   - Schweißstrom ($I_s$),
   - Schweißspannung ($U_s$),
   - Werkstücktemperatur ($T_W$), und
   - Drahtfördergeschwindigkeit ($v_d$).

11. Verfahren nach Anspruch 10, **dadurch gekennzeichnet, dass** ein Überschreiten der Schweißgeschwindigkeit ($v_s$) über einen ersten Grenzwert und/oder ein Unterschreiten der Schweißgeschwindigkeit ($v_s$) unter einen zweiten Grenzwert grafisch in der Anzeigevorrichtung (46) dargestellt wird.

12. Verfahren nach Anspruch 10 oder 11, **dadurch gekennzeichnet, dass** ein Überschreiten der Werkstücktemperatur über einen ersten Grenzwert und/oder ein Unterschreiten der Werkstücktemperatur unter einen zweiten Grenzwert grafisch in der Anzeigevorrichtung (40,46) dargestellt wird

13. Verfahren nach einem der Ansprüche 10-12, **dadurch gekennzeichnet, dass** die Schutzvorrichtung (36) einen ein Visier (38) umfassenden Schutzhelm (36) darstellt, und das Visier (38) mit der Anzeigevorrichtung (40,46) versehen ist.

14. Verfahren nach einem der vorangegangenen Ansprüche, **dadurch gekennzeichnet, dass** mindestens einer der Momentanwerte Schweißgeschwindigkeit($v_s$), Schweißstrom ($I_s$), Schweißspannung ($U_s$), Werkstücktemperatur ($T_w$) und Drahtfördergeschwindigkeit ($v_d$) des Lichtbogenschweißvorgangs (50) in einem Datenspeicher (52) gespeichert werden kann.

15. Vorrichtung zur Ermittlung einer Schweißgeschwindigkeit ($v_s$) bei einem manuell ausgeführten Lichtbogenschweißvorgang (50), umfassend:

   - eine an einer beweglichen Schutzvorrichtung (36), die von einem Schweißer zum Schutz tragbar ist, insbesondere Schweißschutzhelm (36), angebrachte optische Detektionseinrichtung (48) zur Detektion von auf durch den Lichtbogenschweißvorgang (50) zu verbindenden Werkstücken angebrachten Markierungen, und
   - Mittel (110,42) zur Ermittlung der Schweißgeschwindigkeit ($v_s$) aus der Detektion der Markierungen.

16. Vorrichtung nach Anspruch 15, **dadurch gekennzeichnet, dass** die Schutzvorrichtung (36) einen ein Visier (38) umfassenden Schutzhelm (36) darstellt, und das Visier (38) mit der Anzeigevorrichtung (40,46) versehen ist.

17. Vorrichtung nach einem der Ansprüche 15 oder 16, **dadurch gekennzeichnet, dass** die Vorrichtung einen Datenspeicher (52) umfasst, in welchem mindestens einer der Momentanwerte Schweißgeschwindigkeit ($v_s$), Schweißstrom ($I_s$), Schweißspannung ($U_s$), Werkstücktemperatur ($T_w$) und Drahtfördergeschwindigkeit ($v_d$) des Lichtbogenschweißvorgangs (50) gespeichert werden kann.

18. System zum Lichtbogenschweißen, umfassend:

   - eine der Vorrichtungen (100) nach den Ansprüchen 15-17; und
   - eine eine Schweißenergiequelle (4) umfassende Lichtbogenschweißvorrichtung (1).

**Claims**

1. A method for determining a welding speed ($v_s$) during an arc welding process (50) that is carried out manually, comprising:

   - detecting markers attached on workpieces to be connected using the arc welding process (50) by an optical detection device (48) attached on a movable protective device (36) that can be worn by a welder for protection, in particular a protective welding helmet (36), and
   - determining the welding speed ($v_s$) from the detection of the markers.

2. The method according to claim 1, **characterized in that** the detection device (48), which comprises in particular an optical recording unit, can be connected via an activating device (42) to a welding energy source (4) for unidirectional or bidirectional data exchange.

3. The method according to claim 2, **characterized in that** a position verification of the detection device (48) relative to the workpieces to be connected is carried out, and the welding energy source (4) is put into a weldable state only if the detection device (48) is suitably positioned relative to the workpieces.

4. The method according to any one of the preceding claims, **characterized in that** at least one of the welding parameters including welding current ($I_s$), welding voltage ($U_s$) and wire feeding speed ($v_d$) is changed for optimizing the arc welding process (50) in dependence of the determined welding speed ($v_s$).

5. The method according to claim 4, **characterized in that** at least one of the welding parameters is changed for maintaining a predefinable energy per section and/or for maintaining a predefinable a-measure.

6. The method according to claim 4 or claim 5, **characterized in that** a welding energy source (4) is activated by at least one of the changed welding parameters.

7. The method according to any one of the preceding claims, **characterized in that** exceeding the welding speed ($v_s$) above a first limit value and/or falling below a second limit value of the welding speed ($v_s$) triggers at least one acoustic signal.

8. The method according to any one of the preceding claims, **characterized in that** a workpiece temperature ($T_w$) is determined by detecting the arc welding process (50).

9. The method according to claim 8, **characterized in that** exceeding the workpiece temperature ($T_w$) above a first limit value and/or falling below a second limit value of the workpiece temperature ($T_w$) triggers at least one acoustic Signal.

10. The method according to any one of the preceding claims, **characterized in that** the movable protection device (36) comprises an indicator device (40, 46) on which at least one of the following instantaneous values of the arc welding process (50) is indicated:

   - welding speed ($v_s$),
   - welding current ($I_s$),
   - welding voltage ($U_s$),
   - workpiece temperature ($T_w$), and
   - wire feeding speed ($v_d$).

11. The method according to claim 10, **characterized in that** exceeding the welding speed ($v_s$) above a first limit value and/or falling below a second limit value of the welding speed ($v_s$) is graphically illustrated in the indicator device (46).

12. The method according to claim 10 or claim 11, **characterized in that** exceeding the workpiece temperature above a first limit value and/or falling below a second limit value of the workpiece temperature is graphically illustrated in the indicator device (40, 46).

13. The method according to any one of the claims 10 to 12, **characterized in that** the protective device (36) represents a protective helmet (36) comprising a visor (38), and the visor (38) is provided with the indicator device (40, 46).

14. The method according to any one of the preceding claims, **characterized in that** at least one of the instantaneous values including welding speed ($v_s$), welding current ($I_s$), welding voltage ($U_s$), workpiece temperature ($T_w$) and wire feeding speed ($v_d$) of the arc welding process (50) can be stored in a data memory (52).

15. A device for determining a welding speed ($v_s$) during an arc welding process (50) that is carried out manually, comprising:

   - an optical detection device (48) attached on a movable protective device (36) that can be worn by a welder for protection, in particular a protective welding helmet (36), for detecting markers that are attached on the workpieces to be connected using the arc welding process (50), and
   - means (110, 42) for determining the welding speed ($v_s$) from the detection of the markers.

16. The device according to claim 15, **characterized in that** the protective device (36) represents a protective helmet (36) comprising a visor (38), and the visor (38) is provided with the indicator device (40, 46).

17. The device according to any one of the claims 15 or 16, **characterized in that** the device comprises a data memory (52) in which at least one of the instantaneous values including welding speed ($v_s$), welding current ($I_s$), welding voltage ($U_s$), workpiece temperature ($T_w$) and wire feeding speed ($V_d$) of the arc welding process (50) can be stored.

18. A system for arc welding, comprising:

- one of the devices (100) according to the claims 15 to 17; and
- an arc welding device (1) comprising a welding energy source (4).

## Revendications

1. Procédé pour déterminer une vitesse de soudure (v$_s$) lors d'une opération de soudure à l'arc (50) effectuée manuellement comprenant :

   - la détection de marquages disposés sur les pièces à assembler par l'opération de soudage à l'arc (50) par un dispositif de protection (36) mobile, qui est portable pour protection par un soudeur, en particulier un système de détection (48) optique monté sur un casque de protection de soudure (36), et
   - la détermination de la vitesse de soudure (v$_s$) à partir de la détection des marquages.

2. Procédé selon la revendication 1, **caractérisé en ce que** le en particulier un système de détection (48) comprenant en particulier un appareil d'enregistrement optique peut être raccordé par un dispositif de pilotage (42) avec une source d'énergie de soudure (4) à un échange de données uni- ou bidirectionnel.

3. Procédé selon la revendication 2, **caractérisé en ce qu'**un contrôle de position du système de détection (48) est effectué sur les pièces à assembler et **en ce que** la source d'énergie de soudure (4) n'est déplacée vers les pièces dans un état apte à la soudure que lors d'un positionnement approprié du système de détection (48).

4. Procédé selon une quelconque des revendications précédentes, **caractérisé en ce qu'**au moins un des paramètres de soudure : courant de soudure (I$_s$), tension de soudure (U$_s$) et vitesse de déplacement du fil (V$_d$), est modifié pour optimiser l'opération de soudure à l'arc (50) en fonction de la vitesse de soudure (v$_s$) déterminée.

5. Procédé selon la revendication 4, **caractérisé en ce qu'**au moins un des paramètres de soudure est modifié pour maintenir une énergie de parcours spécifiable et/ou pour maintenir une mesure 'a' spécifiable.

6. Procédé selon la revendication 4 ou 5, **caractérisé en ce qu'**une source d'énergie de soudure (4) est pilotée par au moins un des paramètres de soudure modifiés.

7. Procédé selon une quelconque des revendications précédentes, **caractérisé en ce qu'**un dépassement de la vitesse de soudure (v$_s$) au-dessus d'une première valeur limite et/ou un dépassement en dessous de la vitesse de soudure (v$_s$) sous une deuxième valeur limite déclenche au moins un signal acoustique.

8. Procédé selon une quelconque des revendications précédentes, **caractérisé en ce qu'**une température de pièce (T$_w$) est déterminée par la détection de l'opération de soudure à l'arc (50).

9. Procédé selon la revendication 8, **caractérisé en ce qu'**un dépassement de la température de la pièce (T$_w$) au-dessus d'une première valeur limite et/ou un dépassement en dessous de la température de la pièce (T$_w$) sous une deuxième valeur limite déclenche au moins un signal acoustique.

10. Procédé selon une quelconque des revendications précédentes, **caractérisé en ce que** le dispositif de protection (36) mobile comprend un système d'affichage (40, 46) sur lequel au moins une des valeurs momentanées suivantes de l'opération de soudure à l'arc (50) est affichée :

    - vitesse de soudure (v$_s$),
    - courant de soudure (I$_s$),
    - tension de soudure (U$_s$),
    - température de la pièce (T$_w$), et
    - vitesse de déplacement du fil (v$_d$)

11. Procédé selon la revendication 10, **caractérisé en ce qu'**un dépassement de la vitesse de soudure (v$_s$) au-dessus d'une première valeur limite et/ou un dépassement en dessous de la vitesse de soudure (v$_s$) sous une deuxième valeur limite est représenté par un graphique dans le système d'affichage (46).

12. Procédé selon la revendication 10 ou 11, **caractérisé en ce qu'**un dépassement de la température de la pièce au-dessus d'une première valeur limite et/ou un dépassement en dessous de la température de la pièce sous une deuxième valeur limite est représenté par un graphique dans le système d'affichage (40, 46).

13. Procédé selon une quelconque des revendications 10-12, **caractérisé en ce que** le système de protection (36) représente un casque de protection (36) comprenant un viseur (38) et que le viseur (38) est muni du système d'affichage (40, 46).

14. Procédé selon une quelconque des revendications précédentes, **caractérisé en ce qu'**au moins une des valeurs momentanées : vitesse de soudure (v$_s$), courant de soudure (I$_s$), tension de soudure (U$_s$), température de la pièce (T$_w$) et vitesse de déplacement du fil (v$_d$) de l'opération de soudure à l'arc (50), peut être mémorisée dans une mémoire de données (52).

**15.** Dispositif pour déterminer une vitesse de soudure ($v_s$) lors d'une opération de soudure à l'arc (50) effectuée manuellement comprenant :

- un système de détection (48) optique monté sur un dispositif de protection (36) mobile qui est portable pour protection par un soudeur, en particulier un casque de protection de soudure (36), pour la détection de marquages disposés sur les pièces à assembler par l'opération de soudure à l'arc (50), et
- moyen (110, 42) pour déterminer la vitesse de soudure ($v_s$) à partir de la détection des marquages.

**16.** Dispositif selon la revendication 15, **caractérisé en ce que** le dispositif de protection (36) représente un casque de protection (36) comprenant un viseur (38) et **en ce que** le viseur (38) est muni du système d'affichage (40, 46).

**17.** Dispositif selon une quelconque des revendications 15 ou 16, **caractérisé en ce que** le dispositif comprend une mémoire de données (52) dans laquelle au moins une des valeurs momentanées : vitesse de soudure ($v_s$), courant de soudure ($I_s$), tension de soudure ($U_s$), température de la pièce ($T_w$) et vitesse de déplacement du fil ($v_d$) de l'opération de soudure à l'arc (50), peut être mémorisée.

**18.** Système pour le soudage à l'arc comprenant :

- un des dispositifs (100) selon les revendications 15-17 ; et
- un dispositif de soudure à l'arc (1) comprenant une source d'énergie de soudure (4).

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DD 142677 A1
- EP 1077784 B1
- US 4399346 A
- US 5464957 A